# EUROPÄISCHE PATENTANMELDUNG

(11) **EP 2 269 492 A1**
(43) Veröffentlichungstag der Anmeldung: **05.01.2011**
(21) Anmeldenummer: 09008519.2
(22) Anmeldetag: 30.06.2009
(51) Int. Cl.: A47J 43/07

(54) **Rührwerkzeug für Rührschüsseln**

(71) Anmelder: Braun GmbH, 61476 Kronberg (DE)
(72) Erfinder: Ring, Martin, Dr., 61479 Glashütten (DE); Preiss, Thomas, 64297 Darmstadt (DE)

(57) **Zusammenfassung**

Die vorliegende Erfindung betrifft ein Rührwerkzeug, vorzugsweise für eine Küchenmaschine. Insbesondere geht es um ein Rührwerkzeug, mit einem um eine Antriebsachse in einer Rotationsrichtung rotierbaren Nabenteil, von dem sich radial zur Antriebsachse mindestens zwei Rührarme erstrecken, welche jeweils eine Schlagfläche aufweisen, wobei die Rührarme an die Schlagfläche anschließend jeweils eine Schrägfläche aufweisen und diese Schrägfläche an dem ersten Rührarm nach oben ausgerichtet ist und die Schrägfläche am zweiten Rührarm nach unten ausgerichtet ist. Ferner betrifft die Erfindung ein motorgetriebenes Küchengerät und ein Verfahren zum Schlagen von Teig mit einem solchen Rührwerkzeug.

## Beschreibung

### Gebiet der Erfindung

Die vorliegende Erfindung betrifft ein Rührwerkzeug, vorzugsweise für eine Küchenmaschine. Beispielsweise kann das Rührwerkzeug in einem Standgerät (welches typischerweise mit einer Rührschüssel verbunden ist) eingesetzt werden. Es lässt sich mit großem Vorteil in Rührschüsseln oder Teigtrögen einsetzen. Es kann ebenfalls in einem Handmixer eingesetzt werden. Insbesondere ist es auch für den Einsatz mit der Antriebseinheit eines Pürierstabes geeignet. Das Rührwerkzeug soll zum Rühren von Kuchen-, Brot- oder Pizzateig geeignet sein, ebenfalls aber auch zum Schlagen von Sahne und für Zerkleinerungsaufgaben, wie sie beim Rühren anfallen.

### Hintergrund der Erfindung

Für Küchenmaschinen, aber auch für andere Mischungs-, Rühr- und Zerkleinerungsaufgaben ist eine Vielzahl von Rührwerkzeugen bekannt.

US 2006/0062079 A1 (Anmelderin: Ekato Solidmix GmbH) offenbart ein Rührwerkzeug mit zwei verstellbaren Armen zum Einsatz in einem Rührtrog. Dieses Rührwerkzeug kann durch ein Zerkleinerungswerkzeug ergänzt werden. Die mechanische Konstruktion ist anspruchsvoll. Die zusätzliche Benutzung eines Zerkleinerungswerkzeuges erscheint eher aufwendig.

EP 1982624 A1 (Electrodomesticos Taurus S.L.) offenbart ein Küchenwerkzeug, insbesondere für einen Pürierstab. Dieses Werkzeug soll drei oder mehr Klingen aufweisen und aus Metall gefertigt sein. Die Klingen sind in verschiedenen Winkelrichtungen ausgerichtet, um das Durchmischen von Nahrungsmitteln in einem Rührtopf zu fördern. Abgesehen von ihrer Ausrichtung sind die Klingen im Wesentlichen von einfacher symmetrischer Form. Daher erscheint es unwahrscheinlich, dass ein Rührergebnis erzielt werden kann, welches etwa zum Rühren von Kuchenteig ausreichend wäre.

US 2,193,686 (Craddock) offenbart ein Rührwerkzeug mit im Wesentlichen propellerförmigen Rührblättern, welche zusätzlich bestimmte Krallen oder Stege aufweisen. Dieses Rührwerkzeug mag seine Aufgabe zwar effektiv erfüllen, ist aber in der Herstellung anspruchsvoll und kann wohl auch nur aus Metall gefertigt werden, um bei seiner komplizierten Form hinreichende Stabilität aufzuweisen.

EP 193128 A2 (SEB S.A.) offenbart ein Werkzeug, welches insbesondere für die Zubereitung von Marmeladen nützlich sein soll. Das Rührwerkzeug zeigt relativ große Rührschaufeln. Eine Rührschaufel ist in Rotationsrichtung und eine entgegen der Rotationsrichtung ausgerichtet. Die Rührschaufeln sind genau auf eine zu verwendende Rührschüssel abgestimmt. Mit einer anderen Rührschüssel ist das Rührwerkzeug offenkundig schlecht oder gar nicht zu verwenden. Wegen der Größe der Rührschaufeln ist auch ein erhebliches Drehmoment erforderlich, um sowohl ein hinreichendes Durchmischen als auch Zerkleinern von Früchten und dergleichen zu erreichen.

Die vorliegende Erfindung möchte die Schwächen im Stand der Technik vermeiden. Insbesondere soll ein gutes Durchmischen auch fester Rührteige mit einem einfach und preisgünstig herzustellenden Werkzeug ermöglicht werden. Dieses Werkzeug soll auch mit Küchenmaschinen einsetzbar sein, welche kein hohes Drehmoment zur Verfügung stellen können.

Diese Aufgabe wird durch ein Rührwerkzeug nach Anspruch 1 gelöst.

### Hauptmerkmale der Erfindung

Die vorliegende Erfindung betrifft ein Rührwerkzeug, vorzugsweise für eine Küchenmaschine. Insbesondere geht es um ein Rührwerkzeug, mit einem um eine Antriebsachse in einer Rotationsrichtung rotierbaren Nabenteil, von dem sich radial zur Antriebsachse mindestens zwei Rührarme erstrecken, welche jeweils eine Schlagfläche aufweisen, wobei die Rührarme an die Schlagfläche anschließend jeweils eine Schrägfläche aufweisen und diese Schrägfläche an dem ersten Rührarm nach oben ausgerichtet ist und die Schrägfläche am zweiten Rührarm nach unten ausgerichtet ist. Ferner betrifft die Erfindung ein motorgetriebenes Küchengerät und ein Verfahren zum Schlagen von Teig mit einem solchen Rührwerkzeug.

### Detaillierte Beschreibung der Erfindung

Erfindungsgemäß weist das Rührwerkzeug also ein Nabenteil auf, welches um eine Antriebsachse in einer Rotationsrichtung rotierbar ist. Dieses Nabenteil kann im Prinzip beliebige Form haben. Beispielsweise kann es im Wesentlichen zylinderförmig sein. Es kommen auch komplexere Formen in Betracht, beispielsweise kann das Nabenteil im Querschnitt wellenförmig sein.

Von dem Nabenteil erstrecken sich zwei Rührarme. Diese erstrecken sich radial zur Antriebsachse, d.h. mindestens eine Komponente der Rührarme erstreckt sich radial. Die Rührarme müssen aber nicht insgesamt genau senkrecht zur Antriebsachse stehen, sondern kann auch in einem bestimmten Winkel schräg zur Senkrechten stehen. Vorzugsweise allerdings stehen die Rührarme senkrecht zur Antriebsachse.

Die Rührarme weisen eine Schlagfläche auf. Unter einer Schlagfläche ist hierin jede Fläche zu verstehen, welche zum Schlagen oder Rühren von Teig geeignet ist. Insbesondere kommen im Wesentlichen senkrecht zur Rotationsrichtung stehende Flächen in Betracht. Die Schlagfläche kann eben sein oder eine konkave oder konvexe Wölbung aufweisen. Vorzugsweise hat die Schlagfläche in senkrechter Richtung (d.h. die Richtung der Rotationsachse) eine Ausdehnung von mindestens 0,1 mm, 0,25 mm oder 0,5 mm, wobei auch Ausdehnungen von mehr als 1 mm oder 2 mm oder 5 mm in Betracht kommen, die Ausdehnung aber vorzugsweise 10 mm oder 20 mm nicht überschreitet.

Erfindungsgemäß weist das Rührwerkzeug an jeweils eine Schlagfläche anschließen jeweils mindestens eine Schrägfläche auf. Die Schlagfläche weist dabei vorteilhafterweise nach oben oder unten, d.h. die Normalen der Schlagfläche weisen dabei im Wesentlichen nach oben oder unten (bilden aber ebenfalls einen spitzen Winkel mit der Lotrichtung).

Diese kann beispielsweise mit einer radialen Ebene einen spitzen Winkel bildet. Eine radiale Ebene ist eine Ebene, auf der die Antriebsachse senkrecht steht. Das Vorsehen einer Schrägfläche führt wiederum zu einem besseren Rühr- und Durchmischungsergebnis. Es wird angenommen, daß die Schrägfläche beim vollständigen Zerkleinern von Rührgut hilft und daß die Schrägfläche ferner Strömungen im Rührgut hervorruft, welche der Durchmischung förderlich sind.

Insbesondere in der Aufsicht aus Richtung der Antriebsachse betrachtet, beschreibt die Schlagfläche erfindungsgemäß einen Bogen. Folglich weist sie verschiedene Schlagrichtungen auf. Unter einer Schlagrichtung ist hierin jeweils die Normale auf einen Abschnitt der Schlagfläche zu verstehen.

Bei einer bevorzugten Ausführungsform der Erfindung hat nun ein radial innen liegender Teil der Schlagfläche eine im Wesentlichen parallel zur Rotationsrichtung weisende Schlagrichtung. Dagegen hat ein radial sich nach außen anschließender Teil eine im Wesentlichen senkrecht zur Rotationsrichtung weisende Schlagrichtung. Anders ausgedrückt ist also diese Schlagrichtung dieses Teils der Schlagfläche im Wesentlichen tangential zu Rotationsrichtung angeordnet.

Diese Ausrichtung eines Teiles der Schlagfläche hat sich überraschenderweise als vorteilhaft für ein günstiges Mischergebnis erwiesen. Die genauen Prozesse beim Durchmischen verschiedener Teige sind nicht bekannt und dürften auch sehr stark vom speziellen Teig oder Rührgut abhängen. Denkbar ist jedoch eine "ziehende Mitnahme" des Rührguts durch die Schlagfläche, welche vorteilhaft ist. Ferner kann die Schlagfläche, auch wenn sie senkrecht zur Rotationsrichtung steht, eine gewisse Trenn- oder Zerkleinerungswirkung ausüben, wie es scheint.

Vorteilhaft ist es auch, wenn die Schlagfläche kontinuierlich ist. Alternativ jedoch könnte die Schlagfläche auch aus verschiedenen hintereinander gereihten Segmenten oder Stegen bestehen. Ebenfalls hat es sich als günstig erwiesen, wenn die Schlagfläche einen Bogen beschreibt. Insbesondere kommt eine Schlagfläche in Betracht, bei der sich die Schlagrichtung über die Länge der Schlagfläche um mehr als 90° oder mehr als 100° ändert. Dies kommt insbesondere bei einer bogenförmigen Schlagfläche in Betracht. Für diese verschiedenen Ausführungsformen gilt insgesamt, daß sie ein gutes Rührergebnis erzielen. Dieses geschieht, obwohl die Schlagfläche in Teilen parallel zur Rotationsrichtung ausgerichtet ist. Durch die Vermeidung des konventionellen, sozusagen frontalen Schlagens jedoch ist das Rührwerkzeug effektiver und auch drehmomentgünstiger als ein konventionelles Werkzeug.

Erfindungsgemäß kann das Rührwerkzeug auch einen zweiten Rührarm umfassen. (Ferner wäre ein dritter, vierter, fünfter oder weiterer Rührarm möglich.) Dieser Rührarm soll sich in der für den ersten Rührarm beschriebenen Weise wiederum radial zur Antriebsachse erstrecken. Der zweite Rührarm weist ebenfalls eine Schlagfläche auf, die gebogen ist und verschiedene, jeweils senkrecht zur Schlagfläche stehende Schlagrichtungen aufweist. In einer Ausführungsform kann der zweite Rührarm dem ersten Rührarm radial gegenüberliegen.

Der zweite Rührarm kann im Wesentlichen die gleiche Kontur haben wie der erste Rührarm, d.h. der zweite Rührarm ist zum ersten Rührarm drehsymmetrisch. Es kommt aber auch in Betracht, daß der zweite Rührarm eine andere Kontur hat als der erste Rührarm, d.h. er ist nicht drehsymmetrisch zum ersten Rührarm.

Insbesondere kann der zweite Rührarm axial höher angeordnet sein als der erste. Es hat sich gezeigt, daß die Kombination von Rührarmen verschiedener Kontur bessere Rührergebnisse liefert als zwei Rührarme gleicher Kontur. Dies gilt insbesondere für axial in verschiedener Höhe angebrachte Rührarme. Dabei kommt es auch in Betracht, die Anbringungshöhe der Rührarme an der Achse bei der Wahl ihrer Kontur zu berücksichtigen. Bei einem weiteren weiter unten angebrachten Rührarm erscheint es günstig, wenn er beim Rührgut eine Durchströmungs- oder Durchmischungsrichtung fördert, die eher nach oben gerichtet ist, also weg vom Boden eines Rührgefäßes. Dazu ist es von Vorteil, wenn dieser Rührarm eine große nach oben weisende Schrägfläche aufweist.

Erfindungsgemäß kommt ein zweiter Rührarm in Betracht, bei dem sich die Schlagrichtung durch Länge der Schlagfläche um weniger als 100° oder weniger als 90° ändert. Erfindungsgemäß kann sich auch an die Schlagfläche des zweiten Rührarmes eine Schrägfläche anschließen, welche mit einer radialen Ebene einen spitzen Winkel bildet. Bei einem erfindungsgemäßen Rührwerkzeug, welches einen zweiten Rührarm aufweist, kann die Schrägfläche des zweiten Rührarms nach unten zeigen.

Erfindungsgemäß wird auch ein beliebiges motorgetriebenes Küchengerät mit einem Rührwerkzeug, wie hierin beschrieben, zur Verfügung gestellt. Erfindungsgemäß wird ferner ein Verfahren zum Schlagen (und/oder Rühren) von Teig mit einem Rührwerkzeug der hierin beschriebenen Art zur Verfügung gestellt.

Das erfindungsgemäße Rührwerkzeug kann neben den beschriebenen Rührarmen noch Rührarme oder sogenannte Mischflügel anderen Typs enthalten. In Frage kommen beispielsweise Rührarme oder sogenannte Mischflügel kurzer Länge aber großer Fläche, die das Mischen von Rührgut in der Nähe des Nabenteils fördern.

Das Rührwerkzeug kann insgesamt aus einem Material hergestellt werden. Vorteilhafterweise kann es im Spritzgussverfahren hergestellt werden. Besonders Kunststoff, insbesondere Polyoxymethylen (POM). Andere technische Kunststoffe mit guter Steifigkeit und guten Reibwerten, welche somit auch eine gute untere Lagerstelle ausbilden können, sind auch einsetzbar.

Das Verfahren zum Schlagen von Teig wird vorteilhafterweise mit 800 bis 1000 Umdrehungen pro Minute ausgeführt. Im Vergleich zum Schlagen von Teig mit anderen Werkzeugen ist ein deutlich reduziertes Drehmoment erforderlich. Dies gilt insbesondere für das Schlagen schwerer Teige. Als Referenzteig kann Mürbeteig dienen. Das Schlagen eines Referenz-Mürbeteigs mit einem konventionellen Küchenmaschinenaufsatz, wie etwa dem Knethaken des Braun-Gerätes K700 erfordert bis zu 1 Nm Drehmoment. Das erfinderische Rührwerkzeug erlaubt es jedoch einen solchen Teig mit einem Drehmoment von maximal 0,5 Nm zu rühren.

Zum besseren Verständnis der Erfindung sollen auch die nachfolgenden Abbildungen dienen. Soweit hierin und in dem zugehörigen Erläuterungstext technische Merkmale in bestimmter Kombination vorgestellt werden, sind diese auch als einzeln und in anderen Kombinationen offenbart zu betrachten, soweit solche Kombinationen technisch sinnvoll und möglich sind. Bei den Abbildungen zeigen:
- Fig. 1: eine perspektivische Gesamtansicht des Rührwerkzeuges,
- Fig. 2: eine Ansicht des ersten Rührarms von oben,
- Fig. 3: eine Schnittansicht des ersten Rührarms, so wie in Fig. 2 gekennzeichnet,
- Fig. 4: eine Fig. 3 entsprechende Schnittansicht eines alternativen Rührarms,
- Fig. 5: eine Schnittansicht des äußeren Ende des Rührarms aus Fig. 2,
- Fig. 6: eine Ansicht des Rührwerkzeugs von unten,
- Fig. 7: eine Seitenansicht des Rührwerkzeuges.

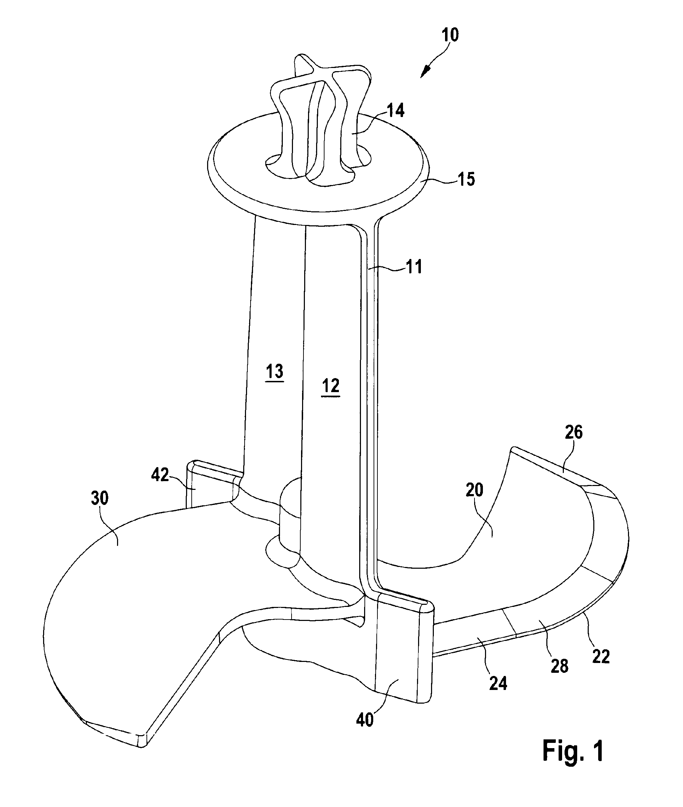

Fig. 1 läßt in perspektivischer Ansicht das Rührwerkzeug 10 und seine Hauptelemente erkennen. Dazu gehört insbesondere das Nabenteil 11. Wie schon in dieser Ansicht erkennbar, ist das Nabenteil in seinem Querschnitt im Wesentlichen wellenförmig gestaltet. Das Nabenteil 11 weist also einen ersten Bogen 12 auf, der in dieser Ansicht konvex auf den Betrachter zu gewölbt ist, und einen sich daran anschließenden zweiten Bogen 13, der in dieser Ansicht konkav ist. Dies erlaubt, mit wenig Material hohe Drehmomente zu übertragen und hat zusätzlich den Effekt, daß auch das Nabenteil einen Beitrag zum Durchmischen von Teig leisten kann. Oben an das Nabenteil 11 schließt sich ein Ring 15 und daran das obere Kupplungsteil 14 an. Mit diesem Kupplungsteil 14 kann das Rührwerkzeug 10 bequem in eine Antriebseinheit eingesetzt werden. Als Antriebseinheit kommt beispielsweise der obere Deckel eines Rührtopfes in Betracht, welcher mit einem Motorteil verbunden ist. Unten erkennt man den ersten Rührarm 20 und gegenüberliegend den zweiten Rührarm 30. Ferner sind um 90° versetzt zur durch die beiden Rührarme definierten Richtung zwei Mischflügel vorgesehen, nämlich ein erster Mischflügel 40 und gegenüberliegend ein zweiter Mischflügel 42. Beim ersten Rührarm 20 erkennt man zum Betrachter hingewandt die Schlagfläche 22. Radial innen liegend ist der Teil 24 der Schlagfläche, während sich der Teil 26 als radial außen liegender Teil anschließt. Der Betrachter blickt auf die Schrägfläche 28, welche sich beim ersten Rührarm 20 an die Schlagfläche 22 anschließt und nach oben gerichtet ist.

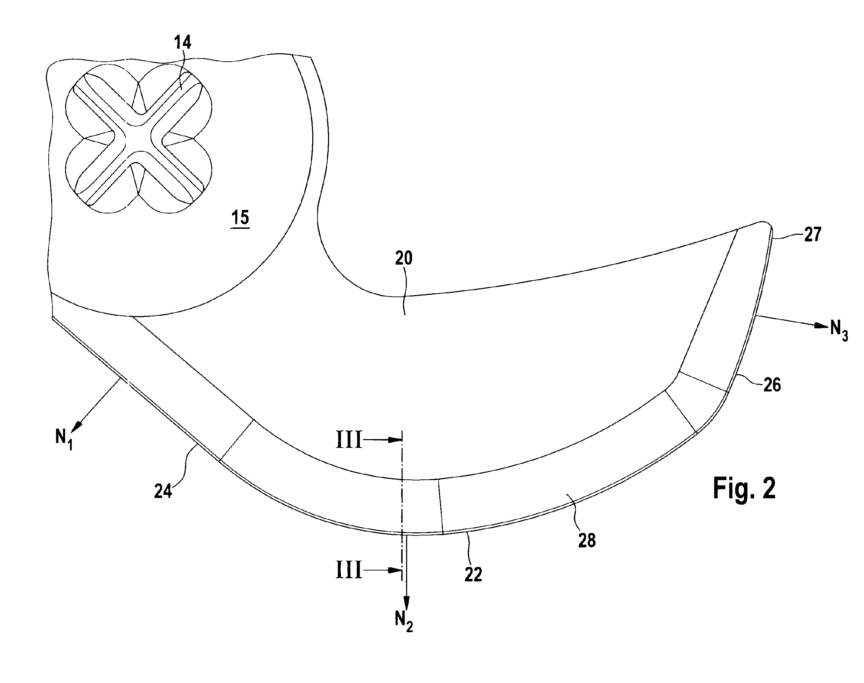

Fig. 2 zeigt den ersten Rührarm 20 in einer Ansicht von oben. Links oben in der Abbildung erkennt man folglich das obere Kupplungsteil 14. Der erste Rührarm 20 weist eine stark gebogene Schlagfläche 22 auf. Diese umfaßt einen radial innen liegenden Teil 24. Die Schlagrichtung des radial innen liegenden Teils 24 entspricht im Wesentlichen der Rotationsrichtung. Anders gesagt, weist eine Normale auf der Schlagfläche in diesem radial innen liegenden Teil 24 in Rotationsrichtung. Wie in der Abbildung deutlich zu erkennen, beschreibt die Schlagfläche 22 einen Bogen. Die Schlagfläche 22 ist also kontinuierlich ausgeführt. Normalen auf die Schlagfläche weisen entlang des Bodens in verschiedene Richtung. Eine Normale auf dem außen liegenden Teil 26 der Schlagfläche weist nicht in die Rotationsrichtung des ersten Rührarms 20, sondern kann sogar radial nach außen weisen, also keinerlei Anteil in Rotationsrichtung haben.

Entlang der Schlagfläche 22 sind verschiedene Normalen auf die Schlagfläche eingezeichnet, nämlich die Normalen N₁, N₂ und N₃. N₁ ist radial am weitesten innen liegend und liegt im innen liegenden Teil 24. N₁ ist im Wesentlichen in Rotationsrichtung des ersten Rührarms 20 ausgerichtet. Die Normale N₂ ist in einem mittleren Teil des Bogens, welchen die Schlagfläche 22 beschreibt, eingetragen. Sie hat eine Komponente in Rotationsrichtung und eine Komponente senkrecht zur Rotationsrichtung, also radial nach außen. Die Normale N₃, welche im außen liegenden Teil 26 der Schlagfläche 22 liegt, weist radial nach außen.

Der erste Rührarm 20 endet in einem äußeren Endbereich 27. Gerade in diesem äußeren Endbereich 27 erfolgt kein frontales Schlagen von Rührgut mehr, sondern allenfalls eine Art "ziehendes Mitnehmen". Oben an die Schlagfläche 22 schließt sich die Schrägfläche 28 an.

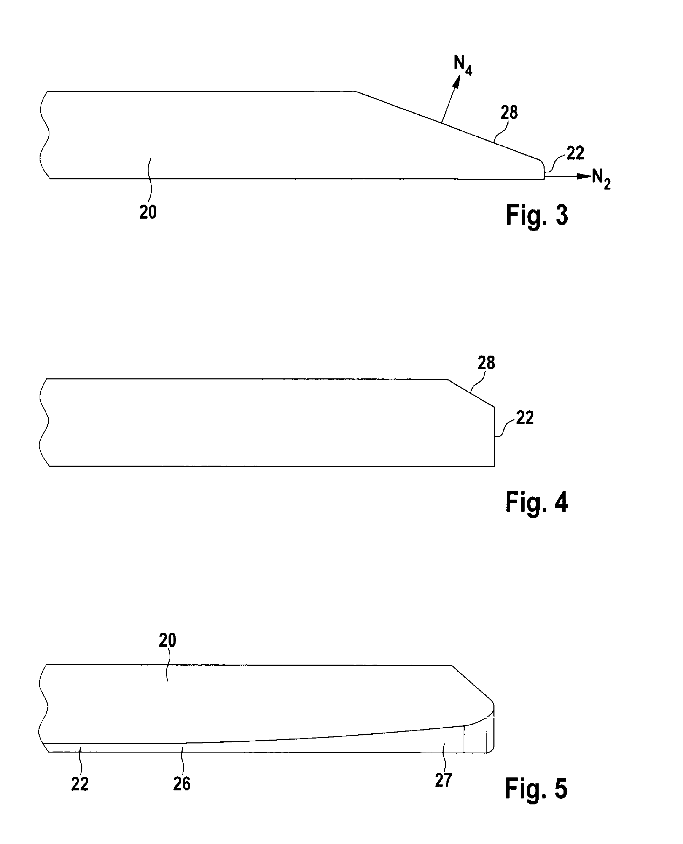

In Fig. 3 erkennt man die Ausrichtung von Schrägfläche 28 und Schlagfläche 22 des ersten Rührarms 20 noch einmal deutlicher. Diese Abbildung zeigt einen Schnitt durch den ersten Rührarm 20 entlang der Linie III-III, wie in Fig. 2 markiert. In dieser Abbildung ist als N₄ eine Normale auf der Schlagfläche 22 gezeigt. Man erkennt, daß die Schrägfläche mit dieser Normalen, welche auch in der Richtung einer radialen Ebene liegt, einen spitzen Winkel bildet. Die Normale N₄ auf der Schrägfläche 28 weist folglich im Wesentlichen nach oben.
Fig. 4 ist eine der Fig. 3 entsprechende Ansichten. Hier ist jedoch, anders als in Fig. 3, eine relativ breite Schlagfläche 22 gezeichnet. Es schließt sich daran eine nur kurze Schrägfläche 28 an. Eine Schlagfläche, welche flächenmäßig größer ist als die Schrägfläche 28, ist durchaus im Sinne dieser Erfindung. Jedoch kann erfindungsgemäß es auch in Betracht kommen, daß die Schrägfläche 28 flächenmäßig gegenüber der Schlagfläche 22 dominiert.
Fig. 5 zeigt eine Ansicht eines günstigen äußeren Endbereichs 27 eines Rührarms für das Rührwerkzeug. In diesem alleräußersten Bereich kann die Höhe der Schlagfläche 22 zunehmen. Die Länge und damit die Fläche einer anschließenden Schrägfläche 28 nimmt entsprechend ab. Die Oberkante der Schlagfläche 22 verläuft somit nach außen ansteigend. Diese Geometrie hat sich als vorteilhaft für das effektive Durchmischen von Teig erwiesen. Sie führt im Übrigen auch dazu, daß sich ein Benutzer im Endbereich des Rührarms nicht an scharfen Spitzen und Kanten verletzen kann.

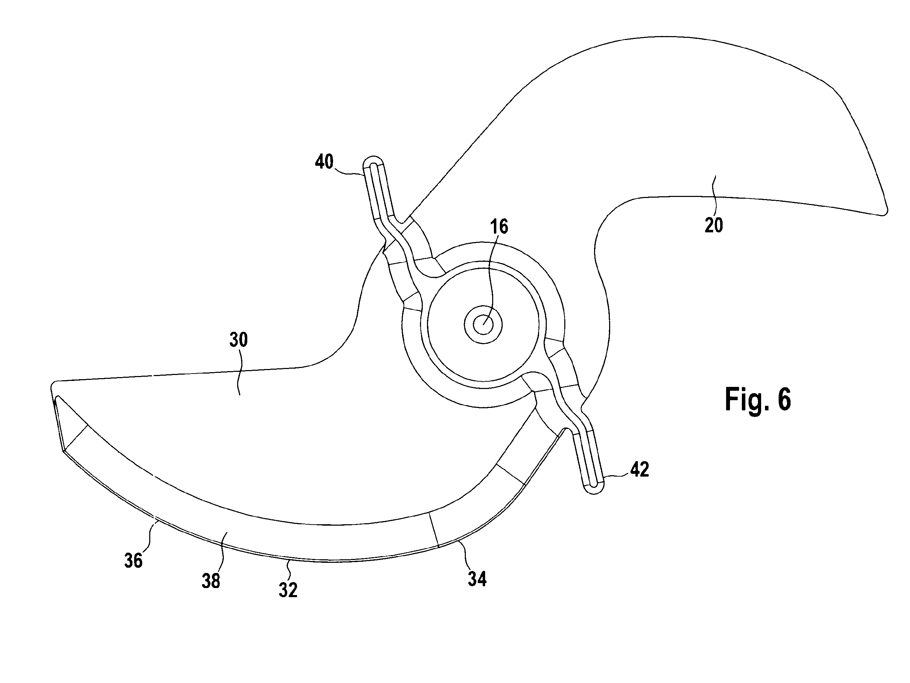

Fig. 6 zeigt eine Aufsicht auf das Rührwerkzeug 10 von unten. Mittig erkennt man das untere Kupplungsteil, welches als Lagerstelle 16 ausgeführt wird. Die Lagerstelle 16 ist im Wesentlichen als Aufnahme für einen Achsabschnitt ausgebildet sein. Man erkennt ferner den ersten Mischflügel 40 und den zweiten Mischflügel 42 sowie den ersten Rührarm 20 und den zweiten Rührarm 30. Da die Schrägfläche 28 des ersten Rührarms nach oben gerichtet ist, ist sie in dieser Abbildung nicht sichtbar. Sichtbar dagegen ist die Schrägfläche 38 des zweiten Rührarms 30, welche nach unten gerichtet ist. Der zweite Rührarm weist ebenfalls eine Schlagfläche 32 auf, welche von einem radial innen liegenden Teil 34 kontinuierlich und bogenförmig auf den radial außen liegenden Teil 36 hin verläuft. Man kann jedoch erkennen, daß die entsprechenden Normalen keinen so großen Winkelbereich überstreichen wie beim ersten Rührarm 20. Ferner kann man erkennen, daß der zweite Rührarm 30 in seiner Kontur vom ersten Rührarm 20 verschieden ist. (Als Kontur soll hierin der Umriß des Rührarms in der Ansicht von unten gelten.)

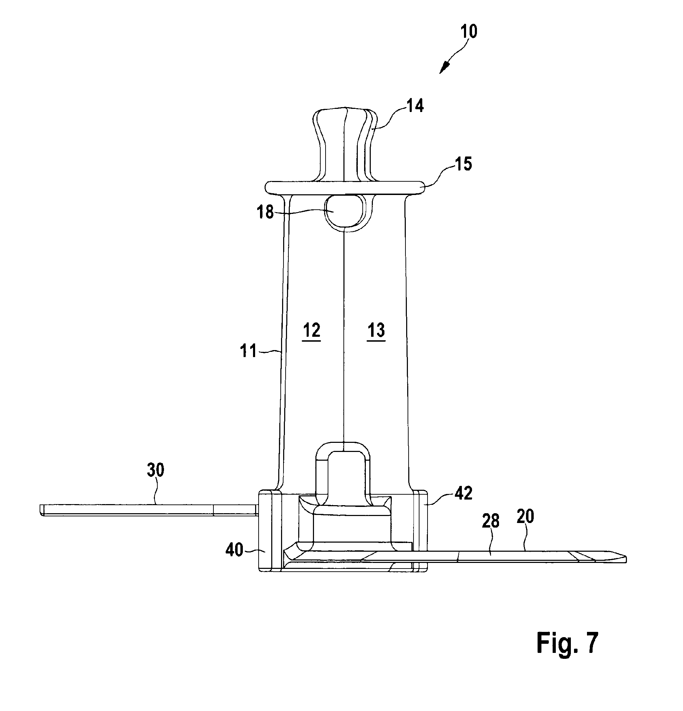

Fig. 7 zeigt eine Seitenansicht des Rührwerkzeugs 20. Als markante Elemente sind wiederum das Nabenteil 11 zu erkennen und der obere Kupplungsteil 14. Ferner erkennt man den ersten Rührarm 20 und den zweiten Rührarm 30 sowie den ersten Mischflügel 40 und den zweiten Mischflügel 42. Die Mischflügel sind entlang der Richtung der Drehachse von gleicher Höhe. Man erkennt an dieser Ansicht ebenfalls besonders gut, daß der erste Rührarm 20 unterhalb des zweiten Rührarms 30 angeordnet ist. (Unterhalb bedeutet hier in Richtung der Rotationsachse gesehen, näher auf die Lagerstelle zu.) Die Anordnung von Rührarmen in verschiedener Höhe hat sich als besonders effektiv für gutes Durchkneten besonders schwerer Teige erwiesen. Dabei ist es vorteilhaft, wenn der untere Rührarm eine nach oben gerichtete Schrägfläche 28 aufweist.

Man erkennt an der Abbildung ferner, daß im Nabenteil 11 eine Aussparung 18 vorgesehen ist. Diese ist so positioniert, daß das Nabenteil trotz der durch die Aussparung erreichten Materialeinsparung ein hohes Drehmoment übertragen kann.

Aus der Beschreibung ist insgesamt deutlich geworden, wie ein Rührwerkzeug hergestellt werden kann, mit dem auch schwere Teige effektiv gerührt werden können und welches sogar mit einem Antrieb von geringem Drehmoment auskommt.

### Bezugszeichenliste:

- 10: Rührwerkzeug
- 11: Nabenteil
- 12: erster Bogen
- 13: zweiter Bogen
- 14: oberes Kupplungsteil
- 15: Ring
- 16: Lagerstelle
- 18: Aussparung
- 20: erster Rührarm
- 22: Schlagfläche
- 24: radial innen liegender Teil
- 26: radial außen liegender Teil
- 27: äußerer Endbereich
- 28: Schrägfläche
- 30: zweiter Rührarm
- 32: Schlagfläche
- 34: radial innen liegender Teil
- 36: radial außen liegender Teil
- 38: Schrägfläche
- 40: erster Mischflügel
- 42: zweiter Mischflügel
- N₁: Normale auf der Schlagfläche an Teil 24
- N₂: Normale auf der Schlagfläche
- N₃: Normale auf der Schlagfläche an Teil 26
- N₄: Normale auf der Schrägfläche

## Patentansprüche

1. Rührwerkzeug (10), insbesondere zum Teigrühren, mit einem um eine Antriebsachse in einer Rotationsrichtung rotierbaren Nabenteil (12), von dem sich radial zur Antriebsachse mindestens zwei Rührarme (20, 30) erstrecken, welche jeweils eine Schlagfläche (22, 32) aufweisen, **dadurch gekennzeichnet, daß** die Rührarme (20, 30) an die Schlagfläche anschließend jeweils eine Schrägfläche (28, 38) aufweisen und diese Schrägfläche (28) an dem ersten Rührarm (20) nach oben ausgerichtet ist und die Schrägfläche (38) am zweiten Rührarm (30) nach unten ausgerichtet ist.

2. Rührwerkzeug (10) nach Anspruch 1, bei dem die Schlagflächen (22, 32) jeweils einen Bogen beschreiben.

3. Rührwerkzeug (10) nach Anspruch 1 oder 2, bei dem die Schlagflächen (22, 32) jeweils verschiedene jeweils senkrecht zur Schlagfläche stehende Schlagrichtungen aufweisen und jeweils ein radial innen liegender Teil (24, 34) der Schlagfläche eine im Wesentlichen parallel zur Rotationsrichtung weisende Schlagrichtung hat und ein sich radial nach außen anschließender Teil (26, 36) eine im wesentlichen senkrecht zur Rotationsrichtung weisende Schlagrichtung hat.

4. Rührwerkzeug (10) nach einem der vorhergehenden Ansprüche, bei dem sich die Schlagrichtung über die Länge der Schlagfläche um mehr als 90° oder mehr als 100° ändert.

5. Rührwerkzeug (10) nach einem der vorhergehenden Ansprüche, bei dem sich an die Schlagfläche (22, 32) eine Schrägfläche (28, 38) anschließt, welche mit einer radialen Ebene einen spitzen Winkel bildet.

6. Rührwerkzeug (10) nach einem der vorhergehenden Ansprüche, bei welchem der zweite Rührarm (30) dem ersten Rührarm (20) radial gegenüberliegt.

7. Rührwerkzeug (10) nach einem der vorhergehenden Ansprüche, bei welchem der zweite Rührarm (30) eine andere Kontur hat als der erste Rührarm (20).

8. Rührwerkzeug (10) nach einem der vorhergehenden Ansprüche, bei dem der zweite Rührarm (30) axial höher angeordnet ist als der erste Rührarm (20).

9. Motorgetriebenes Küchengerät mit einem Rührwerkzeug (10) nach einem der vorhergehenden Ansprüche.

10. Verfahren zum Schlagen von Teig mit einem Rührwerkzeug (10) nach einem der vorhergehenden Ansprüche.
